(19) Europäisches Patentamt / European Patent Office / Office européen des brevets

(11) **EP 3 204 984 B1**

(12) **FASCICULE DE BREVET EUROPEEN**

(45) Date de publication et mention de la délivrance du brevet:
**29.09.2021   Bulletin 2021/39**

(21) Numéro de dépôt: **15798155.6**

(22) Date de dépôt: **07.10.2015**

(51) Int Cl.:
*H01Q 3/00* (2006.01)   *H01Q 13/18* (2006.01)
*H01Q 21/00* (2006.01)   *H01Q 21/06* (2006.01)

(86) Numéro de dépôt international:
**PCT/FR2015/052700**

(87) Numéro de publication internationale:
**WO 2016/055736 (14.04.2016 Gazette 2016/15)**

(54) **PROCÉDÉ DE GÉNÉRATION DE RAYONNEMENTS ÉLECTROMAGNÉTIQUES HAUTE PUISSANCE**

VERFAHREN ZUR ERZEUGUNG VON LEISTUNGSSTARKER ELEKTROMAGNETISCHER STRAHLUNG

METHOD FOR GENERATING HIGH-POWER ELECTROMAGNETIC RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **09.10.2014   FR 1402273**

(43) Date de publication de la demande:
**16.08.2017   Bulletin 2017/33**

(73) Titulaire: **Centre National de la Recherche Scientifique**
**75016 Paris (FR)**

(72) Inventeurs:
• **DE LA GORGUE DE ROSNY, Julien**
  **94130 Nogent Sur Marne (FR)**
• **FINK, Mathias**
  **92190 Meudon (FR)**
• **TOURIN, Arnaud**
  **92310 Sevres (FR)**
• **LEROSEY, Geoffroy**
  **75003 Paris (FR)**
• **DUPRE, Matthieu**
  **75006 Paris (FR)**

(74) Mandataire: **Marks & Clerk France**
**Immeuble "Visium"**
**22, avenue Aristide Briand**
**94117 Arcueil Cedex (FR)**

(56) Documents cités:
WO-A2-2013/182800     FR-A1- 2 985 384
FR-A1- 2 985 386       US-A- 6 023 203

**Description**

DOMAINE DE L'INVENTION

La présente invention est relative à la génération de rayonnements électromagnétiques haute puissance.

Plus particulièrement, l'invention se rapporte à des procédés et des dispositifs pour la génération de tels rayonnements électromagnétiques. L'invention est notamment relative aux procédés et aux dispositifs permettant de générer des ondes électromagnétiques de forte intensité selon une direction de focalisation ou en un point de focalisation souhaité.

ARRIERE-PLAN DE L'INVENTION

On connait depuis plusieurs dizaines d'années des dispositifs de génération de rayonnements électromagnétiques haute puissance utilisant des faisceaux d'électrons se propagent dans un ou plusieurs tubes à vide.

Parmi ceux-ci, les plus utilisés sont notamment les klystrons, les magnétrons, les carcinotrons ou encore les tubes à ondes progressives qui sont par exemple utilisés pour générer des faisceaux radar de haute intensité.

Ces dispositifs présentent de nombreux inconvénients.

Ils sont en particulier hautement énergivores et restent encombrant et fragiles suite à la présence des tubes à vide.

Par ailleurs, il a également été proposé d'appliquer les méthodes de retournement temporel pour amplifier des impulsions électromagnétiques (voir par exemple "Generation of very high pressure pulses with 1-bit time reversal in a solid waveguide" de G. Montaldo, P. Roux, A. Derode, C. Negreira, et M. Fink publié dans The Journal of the Acoustical Society of America, vol. 110, pp. 2849-2857, 2001). Le document de l'art antérieur FR 2 985 386 A1 décrit un procédé et système d'émission d'ondes de forte puissance électromagnétiques comporte un réseau d'antennes élémentaires et une sortie vers l'extérieur.

Plus particulièrement, on dispose pour cela d'un guide d'onde ouvert à une extrémité (avant) et fermé à l'autre extrémité (arrière) par une paroi comportant plusieurs transducteurs piézo-électriques.

Une impulsion est engendrée en un point cible à l'extérieur du guide et se propage à l'intérieur du guide par l'extrémité avant ouverte. Des signaux sont ainsi enregistrés par les transducteurs à l'intérieur du guide, à l'extrémité arrière, et sont représentatif du champ résultant de la propagation de l'onde dans le guide. Du fait de la réverbération sur les parois du guide, ces signaux présentent ainsi un étalement temporel important, par exemple de l'ordre de 1000 fois la durée de l'impulsion initiale. On réémet alors, au moyen des transducteurs, un signal correspondant au signal reçu renversé temporellement.

L'impulsion ainsi générée présente une remarquable compression temporelle au niveau du point cible et, en comparant le signal obtenu au point cible avec celui qui aurait été obtenu sans le guide (par exemple par une émission en eau libre), de remarquables gains ont été mesurés (par exemple de l'ordre de quinze). Les effets de compressions spatiale et temporelle assurent ainsi une impulsion de forte amplitude.

Un tel dispositif permet donc d'obtenir des ondes de haute puissance tout en offrant une réduction de la masse et une amélioration de la solidité par rapport aux dispositifs classiques de génération de micro-ondes tels que décrits ci-avant.

Toutefois, un tel dispositif et un tel procédé présentent des inconvénients. Ainsi pour des ondes décimétriques, le guide d'onde présente notamment l'inconvénient d'un encombrement important.

Pour réduire cet encombrement, il a récemment été proposé de remplacer le guide d'onde par une cavité réverbérante apte à accueillir un grand nombre de réflexion d'une onde électromagnétique se propageant à l'intérieur de ladite cavité tel que cela est par exemple décrit dans « Focusing and amplification of electromagnetic waves by time reversal in an leaky reverberation chamber » par Matthieu Davy, Julien de Rosny, Jean-Christophe Joly et Mathias Fink, publié dans les Comptes Rendus de Physique de l'Académie des Sciences volume 11, pages 37 à 43 du 18 février 2010. Une telle cavité comporte toujours une ouverture avant pour émettre l'onde électromagnétique. Toutefois, pour que la cavité puisse permettre la mise en œuvre des techniques de retournement temporelle, il est nécessaire de limiter les dimensions de l'ouverture pratiquée afin de conserver un facteur de qualité de la cavité suffisamment important.

Par conséquent, la largeur de la tâche focale obtenue au point cible ne peut pas être réduite (la diffraction impose en effet d'agrandir la taille de l'ouverture pour réduire la tache focale au point cible). En outre, la taille limitée de l'ouverture contraint également la plage angulaire sur laquelle le faisceau électromagnétique émis peut être dépointé.

La présente invention a notamment pour but de pallier ces inconvénients.

Ainsi, la présente invention vise à proposer un procédé et un dispositif de génération de rayonnements électromagnétiques haute puissance présentant un encombrement réduit, une solidité et une fiabilité importante, tout en offrant une focalisation supérieure et une plage de dépointage importante.

OBJETS DE L'INVENTION

A cet effet, l'invention a pour premier objet un procédé de génération de rayonnements électromagnétiques haute puissance dans lequel

- on dispose d'une cavité réverbérante comportant une pluralité d'ouvertures et dans laquelle est disposée au moins une antenne d'émission d'un dispositif d'émission apte à émettre une onde électromagnétique d'émission,

- on détermine une forme temporelle F d'onde électromagnétique comportant des éléments choisis parmi des valeurs de phases d'onde électromagnétique et/ou des valeurs d'amplitude d'onde électromagnétique, celle-ci étant focalisée selon une direction de focalisation souhaitée à l'extérieur de la cavité, et
- on émet dans la cavité, au moyen du dispositif d'émission, une onde électromagnétique d'émission E ayant ladite forme temporelle F.

Dans des modes de réalisation préférés de l'invention, on peut éventuellement avoir recours en outre à l'une et/ou à l'autre des dispositions suivantes :

- pour déterminer la forme temporelle F d'onde électromagnétique,

   on dispose une antenne de réception à l'extérieur de la cavité dans la direction de focalisation souhaitée,
   on émet une onde électromagnétique de calibration C large bande dans la cavité au moyen du dispositif d'émission,
   on acquière, au moyen de l'antenne de réception, une série temporelle S de valeurs de signal électrique représentatives du champ électromagnétique généré par l'onde électromagnétique de calibration C à l'endroit de l'antenne de réception, et
   on détermine la forme temporelle F d'onde électromagnétique à partir de ladite série temporelle S ;

- l'onde électromagnétique de calibration C présente une largeur de bande passante supérieure à une inverse d'un temps de décroissance dans la cavité, de préférence supérieure à deux fois une inverse dudit temps de décroissance ;
- on détermine la forme temporelle F à partir de la série temporelle S en mettant en œuvre un procédé choisi parmi un procédé de retournement temporel, un procédé de retournement temporel 1-bit et un procédé de retournement temporel en bande de base ;
- on détermine une pluralité de formes temporelles $F_i$ d'onde électromagnétique respectivement focalisées selon une pluralité de directions de focalisation $\theta_i$ à l'extérieur de la cavité ;
- une dimension maximale D de chacune des ouvertures de la cavité est inférieure ou égale à une longueur d'onde centrale Lc de l'onde électromagnétique d'émission E ;
- une dimension maximale D de chacune des ouvertures de la cavité est sensiblement inférieure à une longueur d'onde maximale Lm de l'onde électromagnétique d'émission E dans la cavité, de préférence proche d'une moitié de ladite longueur d'onde maximale Lm ;

- la cavité est une cavité tridimensionnelle sensiblement fermée sur elle-même, et la pluralité d'ouvertures est disposée de sorte à couvrir sensiblement l'ensemble d'une surface extérieure de la cavité ;
- la cavité est une cavité tridimensionnelle sensiblement fermée sur elle-même, et la pluralité d'ouvertures est disposée sur une face plane de la cavité ;
- la cavité comporte une structure diffusante apte à générer des diffusions multiples de l'onde électromagnétique d'émission E dans la cavité ;
- la pluralité d'ouvertures comprend plus d'une dizaine d'ouvertures, de préférence plus d'une centaine d'ouvertures ;
- une fréquence centrale de l'onde électromagnétique d'émission E est comprise dans la gamme micro-onde, notamment dans une ou plusieurs des bandes L, S, C, X, K, Q, V et W ;
- le procédé comporte en outre une étape de détection de cible au cours de laquelle on détermine une direction de focalisation souhaitée à l'extérieur de la cavité.

L'invention a également pour objet un dispositif de génération de rayonnements électromagnétiques haute puissance comprenant une cavité réverbérante comportant une pluralité d'ouvertures et dans laquelle est disposée au moins une antenne d'émission d'un dispositif d'émission apte à émettre dans la cavité une onde électromagnétique d'émission E ayant une forme temporelle F d'onde électromagnétique comportant des éléments choisis parmi des valeurs de phases d'onde électromagnétique et/ou des valeurs d'amplitude d'onde électromagnétique, celle-ci étant focalisée selon une direction de focalisation $\theta$ souhaitée à l'extérieur de la cavité.

Dans une réalisation de l'invention, le dispositif peut comporter en outre un radar de détection de cible pour déterminer une direction de focalisation souhaitée à l'extérieur de la cavité.

D'autres caractéristiques et avantages de l'invention apparaîtront au cours de la description suivante d'une de ses formes de réalisation, donnée à titre d'exemple non limitatif, en regard des dessins joints.

BREVE DESCRIPTION DES DESSINS

Sur les dessins :

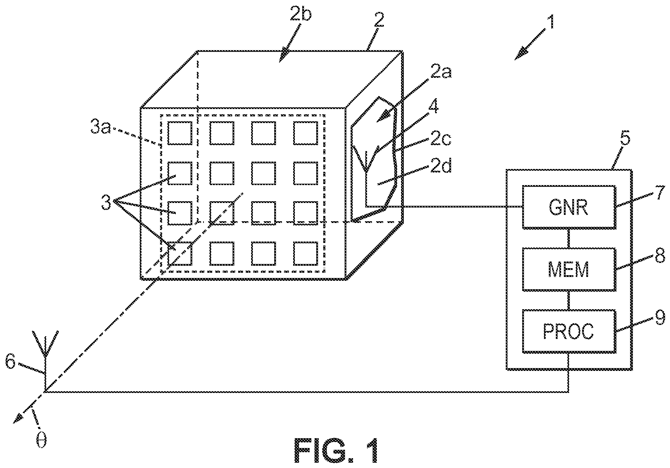

- la figure 1 est une vue schématique d'un dispositif de génération de rayonnements électromagnétiques haute puissance selon un mode de réalisation de l'invention,

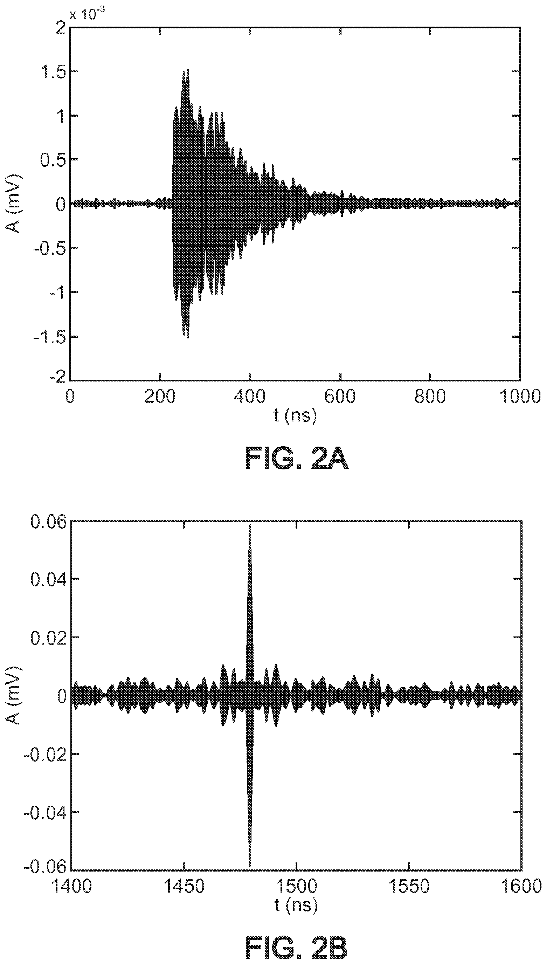

- la figure 2A est un graphique illustrant une série temporelle de valeurs de signal électrique représentatives du champ électromagnétique généré par une onde électromagnétique de calibration à l'endroit d'une antenne de réception d'un dispositif de génération de rayonnements électromagnétiques haute puissance selon un mode de réalisation de l'invention, et

- la figure 2B est un graphique illustrant le champ électromagnétique généré par une onde électromagnétique d'émission en un point extérieur à la cavité lors de la mise en œuvre d'un procédé de génération de rayonnements électromagnétiques haute puissance selon un mode de réalisation de l'invention.

Sur les différentes figures, les mêmes références désignent des éléments identiques ou similaires.

DESCRIPTION PLUS DETAILLEE

La figure 1 illustre un dispositif 1 de génération de rayonnements électromagnétiques haute puissance selon un mode de réalisation de l'invention.

Le dispositif 1 comprend ainsi tout d'abord une cavité 2, notamment une cavité réverbérante. La cavité 2 est une cavité tridimensionnelle, sensiblement fermée sur elle-même mis à part une pluralité d'ouvertures 3. Les ouvertures 3 sont en particulier de dimensions limitées comme cela sera détaillé davantage ci-après.

La cavité 2 comporte ainsi une surface intérieure 2a et une surface extérieures 2b entre lesquelles s'étend une paroi 2c délimitant la cavité 2 de l'extérieur.

La surface intérieure 2a de la cavité 2 défini ainsi un espace intérieur 2d de la cavité 2. L'espace intérieur 2d peut être un espace vide, rempli d'un fluide comme l'air ou l'eau ou encore rempli d'un matériau, notamment rempli d'un diélectrique. Un tel diélectrique permet notamment de contrôler la longueur des rayonnements électromagnétiques dans la cavité et de réduire les dimensions de la cavité 2.

Par « cavité réverbérante », on entend en particulier une cavité dont la surface intérieure est apte à réfléchir des rayonnements électromagnétiques se propageant dans l'espace intérieur de la cavité pour au moins une fréquence électromagnétique d'intérêt desdits rayonnements. On entend ainsi une cavité dont la surface intérieure présente un coefficient de réflexion suffisamment élevé à la fréquence électromagnétique d'intérêt pour qu'une impulsion électromagnétique se propageant dans l'espace intérieur de la cavité se réfléchisse un grand nombre de fois sur la surface intérieure de la cavité, par exemple plusieurs dizaines de fois ou plusieurs centaines de fois, voire même plusieurs millier de fois.

La fréquence électromagnétique d'intérêt peut être n'importe qu'elle fréquence d'onde électromagnétique mais peut avantageusement être comprise dans la gamme micro-ondes, notamment dans ou plusieurs des bandes L, S, C, X, K, Q, V et W.

Dans un exemple de réalisation, purement illustratif et non-limitatif, une fréquence électromagnétique d'intérêt peut être une fréquence de quelques gigahertz, par exemple 2 GHz.

La cavité 2 présente ainsi un temps de décroissance, également communément dénommé « temps de réverbération », élevé devant la durée d'une impulsion électromagnétique émise dans la cavité. Par « temps de décroissance », on entend notamment une durée au cours de laquelle l'énergie totale de ladite impulsion électromagnétique émise dans la cavité est divisée par le nombre d'Euler.

L'atténuation de l'onde électromagnétique est en partie due à l'effet de peau sur la surface intérieure 2a de la cavité 2. Ainsi, la surface intérieure de la cavité 2 peut être métallique de sorte à réduire ladite atténuation.

Bien évidemment, l'atténuation de l'onde électromagnétique est également en partie due aux pertes par rayonnement hors de la cavité, le dispositif et le procédé ayant pour but la génération d'une onde électromagnétique de forte intensité. Avantageusement, la surface intérieure de la cavité 2 est sélectionnée de sorte à ce que l'atténuation due à l'effet de peau soit inférieure à l'atténuation par rayonnement hors de la cavité.

Dans un exemple de réalisation, donné à titre purement illustratif et non-limitatif, la cavité 2 peut comporter une surface intérieure 2a en acier galvanisé recouvert d'aluminium.

La cavité 2 peut présenter des dimensions variables. Par dimensions de la cavité, on entend notamment les dimensions de l'espace intérieur 2d de la cavité 2.

A nouveau selon un exemple de réalisation donné à titre purement illustratif et non-limitatif, la cavité 2 peut présenter une longueur de 1.8 mètres, une largeur de 1.24 mètres et une hauteur de 1.1 mètres.

La cavité 2 comporte par ailleurs une pluralité d'ouvertures 3. Les ouvertures 3 sont des ouvertures traversantes dans la paroi 2c, reliant donc la surface intérieure 2a et la surface extérieure 2b de la cavité 2.

Avantageusement, la cavité 2 comporte un grand nombre d'ouvertures 3, par exemple plus d'une dizaine d'ouvertures, voire plus d'une centaine d'ouvertures.

Les ouvertures 3 sont disposées de sorte à couvrir sensiblement l'ensemble d'une surface d'émission 3a de la cavité 2.

Les ouvertures 3 peuvent être disposées régulièrement sur la surface d'émission 3a ou être disposées de façon aléatoire.

Dans un mode de réalisation, la surface d'émission 3a peut correspondre à la quasi-totalité de la surface extérieure 2b de la cavité 2. La surface d'émission 3a peut ainsi être une surface tridimensionnelle et notamment la surface tridimensionnelle extérieure 2b de la cavité 2.

Par « surface tridimensionnelle », on entend que la surface d'émission n'est pas plane mais présente un volume. On entend en particulier que les ouvertures 3 ne sont pas disposées selon un unique plan de l'espace mais selon plusieurs plans non confondus, par exemple disposées sur deux plans perpendiculaires. De cette façon, l'onde électromagnétique peut être émise selon un grand nombre de direction de l'espace et être focalisée sur un large angle spatial.

Dans un mode de réalisation, la surface d'émission 3a peut être uniquement une portion de la surface extérieure 2b de la cavité 2.

La surface d'émission 3a peut ainsi être notamment une face plane 3a de la surface extérieure 2b de la cavité 2. La cavité 2 peut notamment être parallélépipédique et la face plane 3a peut être une face dudit parallélépipède.

Les ouvertures 3 peuvent présenter une forme générale arbitraire, par exemple une forme carrée, ovale, polygonale, une forme de croix ou plus généralement toute autre forme géométrique fermée.

Les ouvertures 3 permettent ainsi la transmission partielle vers l'extérieur de la cavité 2 des ondes électromagnétiques présentes dans l'espace intérieur 2d de la cavité 2.

De fait, les ouvertures 3 réduisent le temps de décroissance de la cavité 2 et leurs dimensions maximales peuvent avantageusement être réduites et notamment inférieures à une dimension prédéfinie qui va être détaillée plus loin, ceci afin de conserver un temps de décroissance élevé dans la cavité 2 et un nombre important de réflexion des ondes électromagnétiques présentes dans l'espace intérieur 2d.

Par ailleurs, au moins une antenne d'émission 4 d'un dispositif d'émission 5 est disposée dans la cavité 2, c'est-à-dire au moins partiellement dans l'espace intérieur 2d de la cavité 2.

Le dispositif d'émission 5 est apte à émettre dans la cavité 2 une onde électromagnétique d'émission E avec une forme temporelle F prédéfinie et ajustable.

Le dispositif d'émission 5 peut ainsi comporter un générateur de signaux arbitraires 7, apte à générer une onde avec au moins une forme temporelle prédéfinie F, et une mémoire 8, apte à mémoriser au moins une forme temporelle F.

L'antenne d'émission 4 peut notamment être une antenne omnidirectionnelle ou une antenne directionnelle.

Par exemple, dans un mode de réalisation de l'invention, l'antenne d'émission 4 peut être une antenne directionnelle présentant un certain cône d'émission. L'antenne d'émission 4 peut alors être avantageusement disposée dans la cavité 2 de sorte qu'il n'existe pas de trajet rectiligne qui s'étende selon la direction de focalisation $\theta$, soit compris dans le cône d'émission, et passe par une ouverture 3 de la cavité 2 sans rencontrer d'obstacle entre l'antenne d'émission 4 et l'extérieur de la cavité 2, c'est-à-dire sans être diffusé dans la cavité 2. Une telle disposition d'antenne assure que l'ensemble du rayonnement électromagnétique émis par l'antenne d'émission 4 soit diffusé au moins une fois par la surface intérieure 2a de la cavité 2.

Dans une variante de réalisation, plusieurs antennes d'émission 4 peuvent être disposées dans la cavité 2 et commandées par un ou plusieurs générateurs de signaux arbitraires 7 du dispositif d'émission 5.

Lesdites plusieurs antennes d'émission 4 peuvent émettre des ondes électromagnétiques E de formes temporelles identiques. En variante, les antennes d'émission 4 peuvent respectivement émettre des ondes électromagnétiques E de forme temporelles respectives $F_k$ différentes, et notamment des ondes électromagnétiques E de fréquences centrales $Fc_k$ et/ou de bandes passantes $B_k$ respectives différentes.

Dans un mode réalisation de l'invention, la cavité 2 comporte en outre une structure diffusante disposée dans l'espace intérieur 2d de la cavité 2. La structure diffusante peut être apte à générer des diffusions multiples de l'onde électromagnétique d'émission E dans la cavité 2, de sorte à diffuser encore davantage l'onde électromagnétique d'émission E dans la cavité 2.

L'onde électromagnétique d'émission E présente avantageusement une intensité non nulle à la fréquence électromagnétique d'intérêt détaillée ci-avant, de sorte à ce que l'onde électromagnétique d'émission E soit apte à être réfléchie plusieurs fois dans la cavité 2.

A titre d'exemple non limitatif, l'onde électromagnétique d'émission E peut ainsi présenter une fréquence centrale dans la cavité 2 de quelques gigahertz, par exemple 2 GHz.

Avantageusement, une dimension maximale D de chacune des ouvertures 3 de la cavité 2 est inférieure ou égale à une longueur d'onde centrale Lc de l'onde électromagnétique d'émission E dans la cavité 2.

La longueur d'onde centrale Lc de l'onde électromagnétique d'émission E dans la cavité 2 est fonction de la fréquence centrale Fc de l'onde électromagnétique d'émission E et des caractéristiques physiques de l'espace intérieur 2d de la cavité 2.

Dans un mode de réalisation particulier de l'invention, la dimension maximale D de chacune des ouvertures 3 pratiquées dans la cavité 2 est sensiblement inférieure à une longueur d'onde maximale Lm de l'onde électromagnétique d'émission E dans la cavité 2.

Préférentiellement, la dimension maximale D de chacune des ouvertures 3 de la cavité 2 peut être proche d'une moitié de ladite longueur d'onde maximale Lm.

De cette façon, une portion de l'onde électromagnétique d'émission E peut-être émise vers l'extérieur de la cavité par les ouvertures 3, tout en conservant un temps de décroissance élevé dans la cavité 2, par exemple supérieure à mille fois une durée de l'onde électromagnétique d'émission E.

Un procédé de génération de rayonnements électromagnétiques haute puissance selon un mode de réalisation de l'invention peut alors comporter les étapes suivantes.

Dans une première étape de calibration, on détermine une forme temporelle F d'onde électromagnétique focalisée selon une direction de focalisation θ souhaitée à l'extérieur de la cavité 2.

La direction de focalisation θ souhaitée est notamment une direction de focalisation θ repérée par rapport à la cavité 2, par exemple repérée par rapport à la surface d'émission 3a.

Pour déterminer la forme temporelle F, on peut mettre en œuvre les opérations suivantes.

Tout d'abord, on dispose une antenne de réception 6 à l'extérieur de la cavité 2 dans la direction de focalisation θ souhaitée. On peut par exemple disposer une antenne de réception 6 à une distance de la cavité 2 telle que ladite antenne de réception 6 se trouve dans le champ lointain de la cavité 2.

Puis, on émet une onde électromagnétique de calibration C dans la cavité 2 au moyen du dispositif d'émission 5.

L'onde électromagnétique de calibration C peut par exemple présenter une fréquence centrale proche de la fréquence électromagnétique d'intérêt détaillée ci-avant, de sorte à ce que l'onde électromagnétique de calibration C soit apte à être réfléchie plusieurs fois dans la cavité 2.

A titre d'exemple non limitatif, l'onde électromagnétique de calibration C peut présenter une fréquence centrale dans la cavité 2 de quelques gigahertz, par exemple 2 GHz.

L'onde électromagnétique de calibration C est une onde électromagnétique large bande.

Ainsi par exemple, l'onde électromagnétique de calibration C peut présenter une largeur de bande passante supérieure à l'inverse du temps de décroissance dans la cavité 2. De préférence, la largeur de bande passante de l'onde électromagnétique de calibration C peut être supérieure à deux fois l'inverse dudit temps de décroissance.

L'onde électromagnétique de calibration C peut ainsi présenter une bande passante importante, par exemple une bande passante de 50 à 100 pourcents de la fréquence centrale de l'onde de calibration C.

Dans une seconde opération, on acquière, au moyen de l'antenne de réception 6, une série temporelle S de valeurs de signal électrique représentatives du champ électromagnétique généré par l'onde électromagnétique de calibration C à l'endroit de l'antenne de réception 6.

Une telle série temporelle S est notamment illustrée sur la figure 2A.

Du fait de la réverbération de l'onde électromagnétique de calibration C dans la cavité 2, la série temporelle S représentative du champ électromagnétique à l'endroit de l'antenne de réception 6 présente une durée de quelques centaines à quelques milliers de fois la durée temporelle de l'onde électromagnétique de calibration C.

Par « durée de la série temporelle », on entend en particulier la durée sur laquelle les valeurs de la série temporelle sont supérieures à un niveau de bruit donné.

Dans une troisième opération, on détermine alors la forme temporelle F d'onde électromagnétique à partir de ladite série temporelle S.

Cette opération peut notamment être réalisée par une unité de traitement 9 qui peut faire partie du dispositif d'émission 5, comme illustré sur la figure 1, ou être une unité physiquement séparée dudit dispositif d'émission 5.

La forme temporelle F d'onde électromagnétique est par exemple une série temporelle de valeurs de phases de l'onde électromagnétique et/ou une série temporelle de valeurs d'amplitude de l'onde électromagnétique.

Pour déterminer ladite forme temporelle F, on peut par exemple mettre en œuvre un procédé de retournement temporel.

Ainsi, la forme temporelle F peut par exemple correspondre à la série temporelle S retournée dans le temps, c'est-à-dire en chronologie inverse.

La durée de la forme temporelle F peut ainsi être notamment proche de la durée de la série temporelle S.

Dans une variante, on peut mettre en œuvre un procédé de retournement temporel en bande de base. Ainsi, on détermine par exemple une forme temporelle F telle que la phase de ladite forme temporelle F corresponde à la phase de la série temporelle S retournée dans le temps, tandis que l'amplitude de ladite forme temporelle F est constante, ou normalisée, sur toute la durée de la forme temporelle F.

Selon une autre variante, on peut déterminer une forme temporelle F en mettant en œuvre un procédé de retournement temporel 1-bit. Dans ce cas, la forme temporelle F peut correspondre à un retournement temporel de la série temporelle S en conservant uniquement les informations sur le signe de la série temporelle S. La forme temporelle F est ainsi par exemple donnée par

$$F(t) = \begin{cases} 1 \text{ si } S(T - t) \geq 0 \\ -1 \text{ si } S(T - t) < 0 \end{cases}$$

où T est la durée de la série temporelle S.

D'autres variantes de cette opération sont bien sûr envisageables et on comprendra qu'elles mettent avantageusement à profit le principe du retournement temporel de la série temporelle S en conservant plus ou moins d'informations de ladite série temporelle S.

Une fois la forme temporelle F déterminée, le procédé selon l'invention comporte alors une étape au cours de laquelle on émet dans la cavité 2 une onde électromagnétique d'émission E ayant la forme temporelle F. L'onde électromagnétique d'émission E peut notamment être émise au moyen du dispositif d'émission 5.

Le champ électromagnétique généré par une telle onde électromagnétique d'émission E en un point extérieur à la cavité dans la direction de focalisation θ est par exemple illustré sur la figure 2B.

L'onde électromagnétique d'émission E correspondant au retournement temporel du signal de calibration, elle subit une forte compression spatiale et temporelle dans la cavité 2. Toutes les fréquences comprises dans la bande passante de l'onde électromagnétique d'émission E se somment ainsi de façon cohérente à l'extérieur de la cavité selon la direction de focalisation θ et l'onde électromagnétique d'émission E génère une onde extérieure à la cavité de forte amplitude focalisée selon la direction de focalisation θ souhaitée.

Par ailleurs, un encombrement de la surface d'émission 3a, pris perpendiculairement à la direction de focalisation θ, peut être inférieur à une dimension maximale L.

La largeur de la tâche focale de l'onde extérieure H à la cavité, en un point située à une distance d de la cavité 2 sur la direction de focalisation θ, peut ainsi être de l'ordre de

$$\frac{\lambda d}{L}$$

où λ est la longueur d'onde de l'onde extérieure H.

Par « un encombrement de la surface d'émission pris perpendiculairement à la direction de focalisation », on entend une distance maximale entre des points de la surface d'émission, ladite distance étant mesurée perpendiculairement à la direction de focalisation.

Dans un mode de réalisation du procédé selon l'invention, on détermine une pluralité de forme temporelle $F_i$ d'onde électromagnétique respectivement focalisées selon une pluralité de directions de focalisation $\theta_i$ souhaitées à l'extérieur de la cavité.

De cette façon, en émettant, au moyen du dispositif d'émission 5, dans la cavité 2 une onde électromagnétique d'émission E ayant la forme temporelle $F_i$, on peut obtenir une onde électromagnétique d'émission E focalisée dans la direction de focalisation associée $\theta_i$.

On notera que l'étape de déterminer une forme temporelle F d'onde électromagnétique peut être réalisée une fois pour toute lors de la calibration de l'appareil, tandis que l'étape d'émission de l'onde électromagnétique d'émission E ayant la forme temporelle F pourra être réalisé un grand nombre de fois, le cas échéant avec des formes temporelles $F_i$ variées pour être focalisé dans des directions de focalisation $\theta_i$ variées.

On notera par ailleurs qu'une fois la ou les formes temporelles $F_i$ déterminées, il est possible, si nécessaire, de débrancher l'antenne de réception 6, et le cas échéant l'unité de traitement 9, et de les retirer du dispositif 1.

De cette façon, le dispositif 1 peut être allégé en fonctionnement.

Par ailleurs, le procédé selon l'invention peut comporter en outre une étape de détection de cible, au cours de laquelle on détermine une direction de focalisation souhaitée à l'extérieur de la cavité.

Pour cela, on peut notamment détecter une direction et/ou une position d'une cible à l'extérieur de la cavité.

Une telle cible est par exemple un objet dans la direction, ou à l'endroit, duquel on souhaite générer une onde électromagnétique d'émission.

A cette fin, le dispositif 1 de génération de rayonnements électromagnétiques haute puissance peut comporter un radar de détection de cible. L'étape de détection de cible peut alors être réalisée en mettant en œuvre ledit radar. Ledit radar peut être tout radar communément utilisé pour détecter une cible mouvante ou fixe. Le radar peut se présenter sous la forme d'un système indépendant de la cavité 2 ou être incorporé à la cavité 2.

**Revendications**

1. Procédé de génération de rayonnements électromagnétiques haute puissance dans lequel

   - on dispose d'une cavité (2) réverbérante comportant une pluralité d'ouvertures (3) et dans laquelle est disposée au moins une antenne d'émission (4) d'un dispositif d'émission (5) apte à émettre une onde électromagnétique d'émission, les ouvertures (3) étant adaptées pour permettre une transmission partielle vers l'extérieur de la cavité (2) d'ondes électromagnétiques présentes dans l'espace intérieur (2d) de la cavité (2),
   - on détermine une forme temporelle F d'onde électromagnétique comportant des éléments choisis parmi des valeurs de phases d'onde électromagnétique et/ou des valeurs d'amplitude d'onde électromagnétique, celle-ci étant focalisée selon une direction de focalisation souhaitée à l'extérieur de la cavité, et
   - on émet dans la cavité, au moyen du dispositif d'émission, une onde électromagnétique d'émission E ayant ladite forme temporelle F.

2. Procédé selon la revendication 1, dans lequel pour déterminer la forme temporelle F d'onde électromagnétique,

   - on dispose une antenne de réception (6) à l'extérieur de la cavité (2) dans la direction de focalisation souhaitée,
   - on émet une onde électromagnétique de calibration C large bande dans la cavité (2) au moyen du dispositif d'émission (5),
   - on acquière, au moyen de l'antenne de réception (6), une série temporelle S de valeurs de signal électrique représentatives du champ électromagnétique généré par l'onde électromagnétique de calibration C à l'endroit de l'antenne de réception (6), et

- on détermine la forme temporelle F d'onde électromagnétique à partir de ladite série temporelle S.

3.  Procédé selon la revendication 2, dans lequel l'onde électromagnétique de calibration C présente une largeur de bande passante supérieure à une inverse d'un temps de décroissance dans la cavité (2), de préférence supérieure à deux fois une inverse dudit temps de décroissance.

4.  Procédé selon l'une quelconque des revendications 1 à 3, dans lequel la forme temporelle F d'onde électromagnétique comporte des éléments choisis parmi des valeurs de phases d'onde électromagnétique et une des valeurs d'amplitude d'onde électromagnétique.

5.  Procédé selon l'une quelconque des revendications 1 à 4, dans lequel on détermine la forme temporelle F à partir de la série temporelle S en mettant en œuvre un procédé choisi parmi un procédé de retournement temporel, un procédé de retournement temporel 1-bit et un procédé de retournement temporel en bande de base.

6.  Procédé selon l'une quelconque des revendications 1 à 5, dans lequel on détermine une pluralité de formes temporelles $F_i$ d'onde électromagnétique respectivement focalisées selon une pluralité de directions de focalisation $\theta_i$ à l'extérieur de la cavité (2).

7.  Procédé selon l'une quelconque des revendications 1 à 6, dans lequel une dimension maximale D de chacune des ouvertures (3) de la cavité (2) est inférieure ou égale à une longueur d'onde centrale Lc de l'onde électromagnétique d'émission E.

8.  Procédé selon l'une quelconque des revendications 1 à 7, dans lequel une dimension maximale D de chacune des ouvertures (3) de la cavité (2) est sensiblement inférieure à une longueur d'onde maximale Lm de l'onde électromagnétique d'émission E dans la cavité(2), de préférence proche d'une moitié de ladite longueur d'onde maximale Lm.

9.  Procédé selon l'une quelconque des revendications 1 à 8, dans lequel la cavité (2) est une cavité tridimensionnelle sensiblement fermée sur elle-même, et dans lequel la pluralité d'ouvertures (3) est disposée de sorte à couvrir sensiblement l'ensemble d'une surface extérieure (2b) de la cavité (3).

10. Procédé selon l'une quelconque des revendications 1 à 8, dans lequel la cavité (2) est une cavité tridimensionnelle sensiblement fermée sur elle-même, et dans lequel la pluralité d'ouvertures (3) est disposée sur une face plane (3a) de la cavité (3).

11. Procédé selon l'une quelconque des revendications 1 à 10, dans lequel la cavité (2) comporte une structure diffusante apte à générer des diffusions multiples de l'onde électromagnétique d'émission E dans la cavité (2).

12. Procédé selon l'une quelconque des revendications 1 à 11, dans lequel la pluralité d'ouvertures (3) comprend plus d'une dizaine d'ouvertures, de préférence plus d'une centaine d'ouvertures.

13. Procédé selon l'une quelconque des revendications 1 à 12, dans lequel une fréquence centrale de l'onde électromagnétique d'émission E est comprise dans la gamme micro-onde, notamment dans une ou plusieurs des bandes L, S, C, X, K, Q, V et W.

14. Procédé selon l'une quelconque des revendications 1 à 13, comportant en outre une étape de détection de cible au cours de laquelle on détermine une direction de focalisation souhaitée à l'extérieur de la cavité.

15. Dispositif (1) de génération de rayonnements électromagnétiques haute puissance comprenant une cavité (2) réverbérante comportant une pluralité d'ouvertures (3) et dans laquelle est disposée au moins une antenne d'émission (4) d'un dispositif d'émission (5) apte à émettre dans la cavité (2) une onde électromagnétique d'émission E ayant une forme temporelle F d'onde électromagnétique comportant des éléments choisis parmi des valeurs de phases d'onde électromagnétique et/ou des valeurs d'amplitude d'onde électromagnétique, celle-ci étant focalisée selon une direction de focalisation $\theta$ souhaitée à l'extérieur de la cavité (2), les ouvertures (3) étant adaptées pour permettre une transmission partielle vers l'extérieur de la cavité (2) d'ondes électromagnétiques présentes dans l'espace intérieur (2d) de la cavité (2).

16. Dispositif selon la revendication 15 comportant en outre un radar de détection de cible pour déterminer une direction de focalisation souhaitée à l'extérieur de la cavité.

**Patentansprüche**

1.  Verfahren zum Erzeugen von elektromagnetischen Hochleistungsstrahlungen, wobei:

    - eine rückstrahlende Kavität (2) mit einer Mehrzahl von Öffnungen (3) versehen und in der mindestens eine Sendeantenne (4) eines Sendegeräts (5) angeordnet ist, die eine elektromagnetische Sendewelle aussenden kann, wobei die Öffnungen (3) zum Zulassen einer teilweisen Übertragung von im Innenraum (2d) der Kavität (2) vorhandenen elektromagnetischen Wellen nach außerhalb der Kavität (2) ausgelegt sind,
- eine Zeitform F einer elektromagnetischen Welle mit Elementen bestimmt wird, ausgewählt aus elektromagnetischen Wellenphasenwerten und/oder elektromagnetischen Wellenamplitudenwerten, wobei diese in einer gewünschten Fokussierungsrichtung außerhalb der Kavität fokussiert werden, und
- eine elektromagnetische Sendewelle E mit der Zeitform F mittels des Sendegeräts in die Kavität gesendet wird.

2. Verfahren nach Anspruch 1, wobei zum Bestimmen der Zeitform F einer elektromagnetischen Wellen

- eine Empfangsantenne (6) außerhalb der Kavität (2) in der gewünschten Fokussierungsrichtung angebracht wird,
- eine breitbandige elektromagnetische Kalibrierungswelle C mittels des Sendegeräts (5) in die Kavität (2) übertragen wird,
- eine Zeitreihe S von elektrischen Signalwerten, die das von der elektromagnetischen Kalibrierungswelle C erzeugte elektromagnetische Feld repräsentieren, von der Empfangsantenne (6) am Ort der Empfangsantenne (6) erfasst wird, und
- die Zeitform F einer elektromagnetischen Welle auf der Basis der Zeitreihe S bestimmt wird.

3. Verfahren nach Anspruch 2, wobei die elektromagnetische Kalibrierungswelle C eine Bandbreite hat, die größer als ein Kehrwert einer Abklingzeit in der Kavität (2), vorzugsweise größer als das Doppelte eines Kehrwerts der Abklingzeit ist.

4. Verfahren nach einem der Ansprüche 1 bis 3, wobei die Zeitform F einer elektromagnetischen Welle Elemente ausgewählt aus Phasenwerten einer elektromagnetischen Welle und einem der Amplitudenwerte einer elektromagnetischen Welle umfasst.

5. Verfahren nach einem der Ansprüche 1 bis 4, wobei die Zeitform F auf der Basis der Zeitreihe S durch Implementieren eines Verfahrens ausgewählt aus einem Zeitumkehrverfahren, einem 1-Bit-Zeitumkehrverfahren und einem Basisband-Zeitumkehrverfahren bestimmt wird.

6. Verfahren nach einem der Ansprüche 1 bis 5, wobei eine Mehrzahl von Zeitformen $F_1$ einer elektromagnetischen Welle bestimmt werden, die entlang einer Mehrzahl von Fokussierungsrichtungen $\theta_i$ außerhalb der Kavität (2) fokussiert werden.

7. Verfahren nach einem der Ansprüche 1 bis 6, wobei eine maximale Abmessung D jeder der Öffnungen (3) der Kavität (2) genauso groß wie oder kleiner als eine Mittenwellenlänge Lc der elektromagnetischen Sendewelle E ist.

8. Verfahren nach einem der Ansprüche 1 bis 7, wobei eine maximale Abmessung D jeder der Öffnungen (3) der Kavität (2) wesentlich kleiner als eine maximale Wellenlänge Lm der elektromagnetischen Sendewelle E in der Kavität (2), vorzugsweise nahe der Hälfte der maximalen Wellenlänge Lm ist.

9. Verfahren nach einem der Ansprüche 1 bis 8, wobei die Kavität (2) eine im Wesentlichen in sich geschlossene dreidimensionale Kavität ist, und wobei die Mehrzahl von Öffnungen (3) so angeordnet sind, dass sie im Wesentlichen die gesamte Außenfläche (2b) der Kavität (3) bedecken.

10. Verfahren nach einem der Ansprüche 1 bis 8, wobei die Kavität (2) eine im Wesentlichen in sich geschlossene dreidimensionale Kavität ist und wobei die Mehrzahl von Öffnungen (3) auf einer ebenen Seite (3a) der Kavität (3) angeordnet sind.

11. Verfahren nach einem der Ansprüche 1 bis 10, wobei die Kavität (2) eine Streustruktur aufweist, die Mehrfachstreuungen der elektromagnetischen Sendewelle E in der Kavität (2) erzeugen kann.

12. Verfahren nach einem der Ansprüche 1 bis 11, wobei die Mehrzahl von Öffnungen (3) mehr als etwa zehn Öffnungen, vorzugsweise mehr als etwa hundert Öffnungen umfassen.

13. Verfahren nach einem der Ansprüche 1 und 12, wobei eine Mittenfrequenz der elektromagnetischen Sendewelle E im Mikrowellenbereich, insbesondere in einem oder mehreren der Bänder L, S, C, X, K, Q, V und W liegt.

14. Verfahren nach einem der Ansprüche 1 bis 13, das ferner einen Zielerfassungsschritt umfasst, in dem eine gewünschte Fokussierungsrichtung außerhalb der Kavität bestimmt wird.

15. Gerät (1) zum Erzeugen von elektromagnetischen Hochleistungsstrahlungen, das eine rückstrahlende Kavität (2) mit einer Mehrzahl von Öffnungen (3) umfasst und in der mindestens eine Sendeantenne (4) eines Sendegeräts (5) angeordnet ist, das eine elektromagnetische Sendewelle E mit einer Zeitform F einer elektromagnetischen Welle in die Kavität (2) aussenden kann, mit Elementen ausgewählt aus Phasenwerten einer elektromagnetischen Welle und/oder Amplitudenwerten einer elektromagnetischen Welle, wobei diese gemäß einer gewünschten Fokussierungsrichtung θ außerhalb der Kavität (2) fokussiert wird, wobei die Öffnungen (3) zum Zulassen einer teilweisen Übertragung von im Innenraum (2d) der Kavität (2) vorhandenen elektromagnetischen Wellen nach außerhalb der Kavität (2) ausgelegt sind.

16. Gerät nach Anspruch 15, das ferner ein Zielerfassungsradar zum Bestimmen einer gewünschten Fokusrichtung außerhalb der Kavität umfasst.

**Claims**

1. A method for generating high-power electromagnetic radiations, wherein

    - there is provided a reverberant cavity (2) having a plurality of openings (3) and in which there is provided at least one emission antenna (4) of an emission device (5) which is capable of emitting an electromagnetic emission wave, the openings (3) being adapted to allow partial transmission out of the cavity (2) of electromagnetic waves which are present in the internal space (2d) of the cavity (2),
    - there is determined a temporal shape F of an electromagnetic wave having elements selected from phase values of an electromagnetic wave and/or amplitude values of an electromagnetic wave, this electromagnetic wave being focused in a desired focusing direction outside the cavity, and
    - there is emitted into the cavity, by means of the emission device, an electromagnetic emission wave E which has the temporal shape F.

2. The method according to claim 1, wherein, in order to determine the temporal shape F of an electromagnetic wave,

    - there is provided a reception antenna (6) outside the cavity (2) in the desired focusing direction,
    - a wide-band electromagnetic calibration wave C is transmitted into the cavity (2) by means of the emission device (5),
    - there is acquired, by means of the reception antenna (6), a time series S of electrical signal values which represent the electromagnetic field generated by the electromagnetic calibration wave C at the location of the reception antenna (6), and
    - the temporal shape F of an electromagnetic wave is determined from the time series S.

3. The method according to claim 2, wherein the electromagnetic calibration wave C has a pass band width greater than an inverse of a decay time in the cavity (2), preferably greater than twice an inverse of the decay time.

4. The method according to any one of claims 1 to 3, wherein the temporal shape F of an electromagnetic wave comprises elements which are selected from phase values of an electromagnetic wave and one of the amplitude values of an electromagnetic wave.

5. The method according to any one of claims 1 to 4, wherein the temporal shape F is determined from the time series S by carrying out a method selected from a time reversal method, a 1-bit time reversal method and a base band time reversal method.

6. The method according to any one of claims 1 to 5, wherein a plurality of temporal shapes $F_i$ of an electromagnetic wave, which are focused in a plurality of focusing directions $\theta_i$ outside the cavity (2), are determined.

7. The method according to any one of claims 1 to 6, wherein a maximum dimension D of each of the openings (3) of the cavity (2) is less than or equal to a central wavelength Lc of the electromagnetic emission wave E.

8. The method according to any one of claims 1 to 7, wherein a maximum dimension D of each of the openings (3) of the cavity (2) is substantially less than a maximum wavelength Lm of the electromagnetic emission wave E in the cavity (2), preferably near half of the maximum wavelength Lm.

9. The method according to any one of claims 1 to 8, wherein the cavity (2) is a three-dimensional cavity which is substantially closed on itself, and wherein the plurality of openings (3) are arranged so as to substantially cover the whole of an external surface (2b) of the cavity (3).

10. The method according to any one of claims 1 to 8, wherein the cavity (2) is a three-dimensional cavity which is substantially closed on itself, and wherein the plurality of openings (3) are arranged on a planar face (3a) of the cavity (3).

11. The method according to any one of claims 1 to 10, wherein the cavity (2) comprises a diffusing structure which can generate multiple diffusions of the electromagnetic emission wave E in the cavity (2).

12. The method according to any one of claims 1 to 11, wherein the plurality of openings (3) comprises more than ten openings, preferably more than a hundred openings.

13. The method according to any one of claims 1 to 12, wherein a central frequency of the electromagnetic emission wave E is in the microwave range, particularly in one or more of the bands L, S, C, X, K, Q, V and W.

14. The method according to any one of claims 1 to 13, further comprising a step of detecting a target during which a desired focusing direction is determined outside the cavity.

15. A Device (1) for generating high-power electromagnetic radiations, comprising a reverberant cavity (2) having a plurality of openings (3) and in which there is provided at least one emission antenna (4) of an emission device (5) which is capable of emitting in the cavity (2) an electromagnetic emission wave E having a temporal shape F of an electromagnetic wave, having elements selected from phase values of an electromagnetic wave and/or amplitude values of an electromagnetic wave, this electromagnetic wave being focused in a desired focusing direction $\theta$ outside the cavity (2), the openings (3) being adapted to allow partial transmission out of the cavity (2) of electromagnetic waves which are present in the internal space (2d) of the cavity (2).

16. The device according to claim 15, further comprising a target detection radar for determining a desired focusing direction outside the cavity.

FIG. 1

FIG. 2A

FIG. 2B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2985386 A1

**Littérature non-brevet citée dans la description**

- **G. MONTALDO ; P. ROUX ; A. DERODE ; C. NEGREIRA ; M. FINK.** Generation of very high pressure pulses with 1-bit time reversal in a solid waveguide. *The Journal of the Acoustical Society of America,* 2001, vol. 110, 2849-2857

- **MATTHIEU DAVY ; JULIEN DE ROSNY ; JEAN-CHRISTOPHE JOLY ; MATHIAS FINK.** Focusing and amplification of electromagnetic waves by time reversal in an leaky reverberation chamber. *Comptes Rendus de Physique de l'Académie des Sciences,* 18 Février 2010, vol. 11, 37-43